# EUROPEAN PATENT SPECIFICATION

(11) **EP 2 914 067 B1**
(45) Date of publication and mention of the grant of the patent: **25.04.2018**
(21) Application number: 14156915.2
(22) Date of filing: 27.02.2014
(51) Int. Cl.: B64D 11/00, H05B 33/08, H05B 37/02

(54) **Lighting system and method for controlling a lighting system**
Beleuchtungssystem und Verfahren zur Steuerung eines Beleuchtungssystems
Système d'éclairage et procédé de commande dudit système

(43) Date of publication of application: 02.09.2015
(73) Proprietor: Airbus Operations GmbH, 21129 Hamburg (DE)
(72) Inventor: Chen, Bing, 22359 Hamburg (DE); Müller, Jan, 21077 Hamburg (DE); Mahn, Stefan, 21614 Buxtehude (DE); Suckow, Dirk, 21079 Hamburg (DE)
(74) Representative: Isarpatent

(56) References cited:
- WO-A1-03/101098
- WO-A1-2005/069640
- WO-A1-2012/085738
- WO-A2-03/034392
- US-A1- 2012 229 048
- Unknown: "Matrix (mathematics) m-by-n matrix", , 21 April 2017 (2017-04-21), pages 1-21, XP055366188, Wikipedia Online Encyclopedia Retrieved from the Internet: URL:https://en.wikipedia.org/wiki/Matrix_% 28mathematics%29 [retrieved on 2017-04-21]
- Unknown: "Array data structure", , 21 April 2017 (2017-04-21), XP055366191, Wikipedia Online Encyclopedia Retrieved from the Internet: URL:https://en.wikipedia.org/wiki/Array_da ta_structure [retrieved on 2017-04-21]

## Description

The present invention relates to a lighting system and a method for controlling a lighting system, particularly for use in lighting systems of airborne vehicles.

Airborne vehicles employ illumination and lighting applications in order to not only provide lighting as such for the interior of the airborne vehicle, but additionally deliver a sense of welcome and pleasant atmosphere to the passengers aboard the airborne vehicle. Particularly in the field of cabin illumination of passenger aircraft, aircraft manufacturers constantly strive towards even higher standards in lighting scenarios.

Emerging lighting technology employing highly modularized light emitting diodes (LEDs) and matrices or arrays thereof, respectively, increases the demand for efficient, reliable and cost-saving solutions that are able to deal with the complex controlling of the multitude of luminaries or groups of luminaries.

Document EP 1 118 252 B1 discloses a lighting control system with a lighting unit and an environment light sensor that is capable of transmitting control data wirelessly to the lighting unit.

Document US 7,546,168 B2 discloses a plurality of luminaires with associated luminaire managers that are able to transmit luminaire status information wirelessly to a central network server.

Document WO 2012/125502 A2 discloses a lighting system including luminaires that are connected through a network to a computing system. The luminaires are capable of producing lighting having a programmable spectral distribution. The computing system can execute one or more applications that are adapted for operation of the luminaires to process scripts of lighting scenarios that are executable by the luminaires in the system.

Document WO 2005/069640 A1 discloses light script command encoding for ambient lighting control. The light script commands include setting codes and change codes for luminance, chrominance and light character as well as change types and change rates which are grouped in a packetized bitstream from transmission to an ambient light source.

Document US 2009/0323321 A1 discloses a system includes light sources and a player connected to the light sources. Each light source includes multiple emitters such as LEDs with the player being connected to independently control the intensity of light emitted from each of the emitters and being capable of using illumination data to determine respective intensities of emissions from the emitters required to produce the illumination represented by the illumination data.

One object of the invention is to reduce the bandwidth demand for transmitting control information from a lighting control device to one or more illumination devices.

This object is achieved by a lighting system having the features of claim 1 and a method for controlling a lighting system having the features of claim 6.

A first aspect of the invention thus pertains to a lighting system, comprising at least one illumination device comprising a luminaire and a luminaire controller configured to control the operational state of the luminaire according to lighting control data, and a lighting controller configured to transmit the lighting control data to each of the at least one illumination device. The lighting controller is configured to pre-format the lighting control data for the at least one illumination device in one or more colour space representation matrices having matrix entries corresponding to colour space representation values for the luminaire. The lighting controller is further configured to encode the pre-formatted colour space representation matrices using a data compression algorithm.

According to a second aspect of the invention, a method for controlling a lighting system comprises pre-formatting lighting control data for at least one illumination device in one or more colour space representation matrices having matrix entries corresponding to colour space representation values for luminaires of the illumination device, encoding the pre-formatted colour space representation matrices using a data compression algorithm, and transmitting the encoded colour space representation matrices to each of the at least one illumination device via a communication link.

According to a third aspect of the invention, an airborne vehicle comprises a lighting system according to the first aspect of the invention.

The idea on which the present invention is based is to arrange control information for controlling the operation or one or more illumination devices in one or more matrices and to encode the resulting matrices using a data compression scheme. The encoded matrices take up less bandwidth when being sent to the illumination devices. The invention enables the efficient usage of a low energy, cost efficient and low data rate wireless network such as a network of wireless sensors/actuators for the control of illumination and lighting in an aircraft. Particularly illumination and lighting systems having highly redundant control data are improved in their efficiency. Moreover, by reducing the bandwidth demand of control data flow a lighting system with a multitude of lighting components may be operated in optimum synchronization.

According to an embodiment of the system and the method, the data compression algorithm may comprise a run-length encoding scheme, an entropy encoding scheme, a deflation scheme, wavelet transforming, Fourier transforming, Discrete Cosine transforming and/or a fractal compression scheme.

According to the invention, the colour space representation matrices have a number of columns corresponding to the number of illumination devices in the lighting system.

According to the invention, the subsequent rows of the colour space representation matrices comprise lighting control data for subsequent time slots of controlling the operational states of the luminaires.

According to a further embodiment of the system and the method, the colour space representation matrices may comprise subblocks of colour space representation values corresponding to lighting control data of luminaires of adjacent illumination devices with respect to the same time slot.

According to a further embodiment of the system and the method, the luminaires may comprise fluorescent tubes and/or solid-state light emitters.

According to a further embodiment of the system and the method, the lighting controller may be configured to transmit the lighting control data to the at least one illumination device via a wireless communication link.

According to a further embodiment of the method, the colour space representation matrices may be streamed to the at least one illumination device.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
- Fig. 1: schematically illustrates a lighting system according to an embodiment of the invention.
- Fig. 2: schematically illustrates a first example of a matrix with control information for illumination devices according to another embodiment of the invention.
- Fig. 3: schematically illustrates a second example of a matrix with control information for illumination devices according to another embodiment of the invention.
- Fig. 4: schematically illustrates a third example of a matrix with control information for illumination devices according to another embodiment of the invention.
- Fig. 5: schematically illustrates a method for controlling a lighting system according to another embodiment of the invention.
- Fig. 6: schematically illustrates an aircraft with a lighting system according to another embodiment of the invention.
In the figures, like reference numerals denote like or functionally like components, unless indicated otherwise.

Luminaires in the sense of the present disclosure comprise any kind or type of devices that are able to generate light in a controlled manner, i.e. depending on the content of control information sent to the lighting or illumination devices, the devices may output light of varying colour, intensity, chrominance, luminance, chromaticity, hue, saturation and/or brightness. Luminaires within the meaning of the present disclosure may for example include fluorescent tubes, solid-state lighting devices such as semiconductor light emitting diodes (LEDs), organic light emitting diodes (OLEDs) or polymer light emitting diodes (PLEDs), laser diodes, gas discharge lamps, arc lamps and similar luminaries.
Colour space representations in the sense of the present disclosure comprise multi-dimensional numerical representations in any abstract mathematical colour model which is able to represent colours as vectors or tuples of values that are associated to a reference colour space. Colour models within the meaning of the present disclosure may for example comprise the CIE Model, the Red-Green-Blue Model (RGB), the Cyan-Magenta-Yellow-Black Model (CMYK), the Luminance/Chrominance Model (YCC, YUV, YIQ) and the Hue/Saturation Model (HSL, HSV).

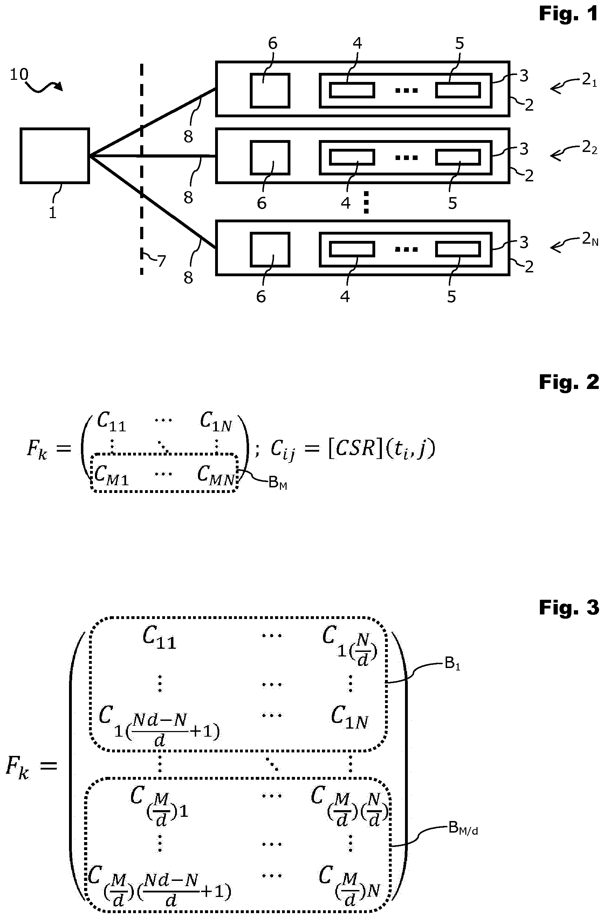

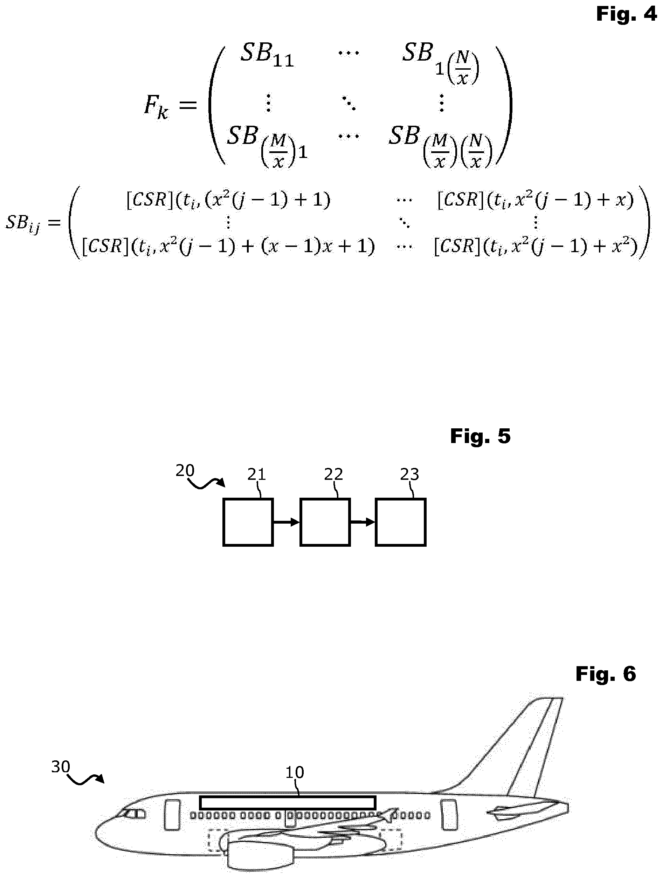

Fig. 1 schematically illustrates a lighting system 10. The lighting system 10 may particularly be employed in an airborne vehicle, such as an aircraft 30 as exemplarily shown in Fig. 6. In particular, the lighting system 10 may be employed in a passenger cabin of the aircraft 30 of Fig. 6.

The lighting system 10 includes a centralized lighting controller 1 that is configured to control the operation of one or more illumination devices 2. Fig. 1 exemplarily illustrates three illumination devices 2, however, any number N of illumination devices 2 is equally possible as well. The illumination devices 2 comprise a luminaire 3 which in turn comprises one or more light emitting components such as, for example, one or more fluorescent tubes 4 and/or one or more solid-state lighting emitters 5. The luminaires 3 are locally controlled by a luminaire controller 6 in each case. The luminaire controllers 6 of the illumination devices 2 may be coupled with the lighting controller 1 via a communication interface 7 over a dedicated communication link 8. The communication links 8 may be examples be data cables. However, it is also possible for the communication links 8 to be wireless links, such as radio frequency links or infrared links. In that case, the communication interface 7 may be a wireless communication interface 7 and the luminaire controllers 6 as well as the lighting controller 1 may be equipped with appropriate wireless transceivers (not explicitly shown in Fig. 1).

Lighting control is effected by the lighting controller 1 through communicating lighting control data to the luminaire controllers 6 via the communication links 8. Every luminaire controller 6 may get its own lighting control data in regular intervals. The lighting control data may consist of mainly colour and brightness values to be set in the respective luminaire 3. Rapidly changing lighting requirements result in more and more complex light scenario effects with fine resolution and high refresh rates leading to an increasing amount of bandwidth taken up to transmit lighting control data to a plurality of illumination devices 2.

The lighting control data may be employed to implement so-called "lighting scenarios" in which a set of control data is transmitted repeatedly to the illumination devices 2 with changing luminance and chrominance information, which allows for example simulating a sunrise or dawn. It is possible to assign different values for luminance and chrominance to each dedicated illumination device 2 or groups of illumination devices 2 according to their different positions at the same time, resulting for example in the impression that light is moving through the cabin. Such lighting scenarios require a substantial amount of control data to be conveyed to the illumination devices 2.

Especially in wireless networks of aircraft which are favourable in terms of weight and customisation opportunities, transmission frequencies as a shared medium by nature are limited. For the efficient usage of the lighting system 10 along with other wireless applications aboard the aircraft, it is desirable to reduce the bandwidth demand for wireless lighting control data transmission.

In order to reduce bandwidth for the transmission of lighting control data from the lighting controller 1 to the luminaire controllers 6 data compression algorithms may be employed in order to reduce the data volume of the lighting control data to be transmitted. To be able to efficiently apply such data compression algorithms, the lighting control data will need to be pre-formatted. The data compression schemes used may be lossless or lossy data compression algorithms. Lossless data compression algorithms may for example utilize a beneficial arrangement of the raw data to reduce redundancy. On the other hand, lossy data compression algorithms may involve eliminating unnecessary details to reduce irrelevant data, since the human eye has certain deficiencies, amongst others regarding colour resolution and the perception of high contrasts around edges.

Data compression algorithms that may be used comprise inter alia run-length encoding schemes, entropy encoding schemes, deflation schemes, transform coding schemes such as wavelet transforming, Fourier transforming (FT) or Discrete Cosine transforming (DCT) and fractal compression schemes. It may for example be useful to use still image compression algorithms such as JPEG image compression and/or moving picture compression algorithms such as H.264 encoding or MPEG-x compression.

The pre-formatting by the lighting controller 1 may comprise generating time-resolved lighting control data for each of the luminaire controllers 6 of a plurality of N illumination device 2₁, 2₂, ..., 2_{N}. In case of coloured lighting, lighting control data for each illumination device 2 may for example be split into a value for luminance Y (two separate values Y1 and Y2 in case of a combined lighting with a fluorescent tube 4 and a solid-state light emitter 5) and two values for chrominance C1 and C2. Those values enable the luminaire controller 6 to set the luminaire 3 to a dedicated colour and brightness. C1 and C2 are difference values generated from two primary colours.

The values for luminance Y and chrominance C1 and C2 may also be transformed into intensity values of each of the primary colours red, green and blue (RGB) in an RGB colour model. From RGB as a basis it may also possible to convert the lighting control data to other colour spaces.

Usually, several illumination devices 2 are controlled according to the same or nearly the same values for colour, luminance, chrominance and/or brightness. At the same time, the changes in a lighting scenario from one control value to the following one are usually rather small. Additionally, the luminaires 3 may have a certain limited gamut and idleness, so that certain deviations in lighting control cannot be reasonably perceived by the human eye anyway. Thus, the lighting control data may be subject to data compression without significant losses in control quality of the illumination devices 2.

Fig. 2 shows an exemplary manner of pre-formatting the lighting control data in two-dimensional matrices Fₖ, where k is a running index indicating subsequently used matrices F for controlling the illumination devices 2. A lighting scenario may be completely covered by a single matrix Fₖ, however, it may also be possible to use multiple matrices Fₖ to implement a lighting scenario, wherein the lighting control data from the matrices Fₖ are used one after the other to control the illumination devices 2. The matrices Fₖ may be received by the illumination devices 2 and respectively decoded again for controlling the operational state of the luminaires 3

In general, for introducing compression for the lighting control, different implementation options may be regarded. As a first option, the lighting control data from the one or more matrices Fₖ may be pre-loaded into the illumination devices 2 or a temporary storage of the luminaire controllers 6, respectively. It may be possible to use a common data file for all illumination devices 2, wherein each luminaire controller 6 is configured to pick out the respective information for the associated illumination device 2 from the common data file. Alternatively, it may be possible to use different dedicated data files, one for each of the illumination devices 2. Even though this option may appear uncritical concerning the required bandwidth, it needs to be regarded that a possibility is required to update lighting scenarios of the aircraft during ground times and it is intended to use a shared medium like a wired bus system or a wireless link. Therefore, the time required for lighting control data loading needs to be kept as short as possible, with as little impact on turnaround or maintenance time due to pre-loading of lighting scenarios.

As a second option, the lighting control data from the one or more matrices Fₖ may be streamed to the illumination devices 2. Again, it may be possible to broadcast the complete lighting control data for all illumination devices 2 in one common stream. Alternatively, separate unicasts of dedicated lighting control data for each of the illumination devices 2 may be transmitted.

Returning to Fig. 2, each entry Cᵢⱼ of the matrices Fₖ - with i indicating the respective matrix row and j indicating the respective matrix column - may include a colour space representation [CSR] value, for example three discrete values of the primary colours red, green and blue in the RGB model or the three discrete values for luminance and chrominance in a Luminance/Chrominance Model (YCC, YUV, YIQ). As needed, a conversion applying matrix calculus may be performed, depending on what format the original lighting control data is input in. What kind of CSR may be chosen, may depend on the level of efficiency when compressing the control data in the matrices Fₖ.

The discrete values may comprise arithmetic, percentage or digital n-bit values, depending on what coding protocol is employed. The rows i are assigned to time slots tᵢ, whereas the columns j are assigned to the different illumination devices 2ⱼ. In other words, the entry Cᵢⱼ of the matrices Fₖ indicates a desired CSR value for the illumination device 2ⱼ at the time slot tᵢ. The time slots tᵢ may run consecutively from i = 1 to i = M, i.e. depending on the granularity of the control data updating frequency, a certain time period t_{M} - tᵢ may be covered with a single matrix Fₖ. Each of the rows i is assigned to block data Bᵢ which is a complete set of lighting control data for all participating illumination devices 2 for one time slot tᵢ. In the example of Fig. 2, the number of illumination devices N matches the number of columns of the matrices Fₖ so that each block data Bᵢ only takes up exactly a single row i. Particularly, in case only the values for one single illumination device (N=1) shall be compressed and transmitted at a time, there will be simply matrices Fₖ with only one column. If this is not supported by the utilized data compression algorithm, a number of consecutive time slots can be arranged in a row followed by a change to the next row.

The thus pre-formatted matrices Fₖ are then subject to the selected data compression algorithm. For example, image compression for still pictures can be realized such as a JPEG2000 standard scheme based on wavelet transformation. This has the advantage that the whole matrices Fₖ are processed, so even with high compression no or substantially no differences in luminance and colour between neighbouring illumination devices 2 will be perceivable to the human eye. Furthermore, wavelet transformations allow for removing higher frequencies in the frequency domain (which corresponds to high contrast between neighbouring illumination devices 2 which is not very likely to happen). Further processing operations like shifting and re-scaling the values to a possibly different domain of the image format may be performed as well, as needed.

Fig. 3 schematically illustrates another example for the pre-formatting of lighting control data in one or more matrices Fₖ. In contrast to the matrices in Fig. 2, the matrices Fₖ of Fig. 3 only have N/d columns with d being a natural number greater than or equal to 2. The lighting control data is divided into equally sized subsets of control data for subsets of illumination devices 2. Instead of taking up a single row, the CSR values for one time slot tᵢ take up d rows, depending on the value of d. With the row number of the matrices Fₖ staying the same as in Fig. 2, only a fraction of M/d time slots may be fit into the contents of the matrices Fₖ. In order to fully represent M time slots, d subsequent matrices Fₖ may be chained one after the other in a manner similar to frames of video data.

Thus, video data compression algorithms using the discrete cosine transformation (DCT) or Fourier transformation (FT) may be employed, such as currently established video codecs (for example MPEG-2 or MPEG-4 AVC). The size of the matrices F_{k,}, i.e. the frame size in terms of video data compression, may be selected in a way that an integer number of CSR value sets for the illuminations devices 2 may fit into the matrices Fₖ, so that the CSR values for a dedicated illumination device 2 will always remain at the same position within consecutive matrices Fₖ or frames.

The pre-formatting of Fig. 3 is especially suited for streaming of lighting control data. All streaming related challenges like buffering and synchronization are better met since information may be quickly transmitted piecewise without the need of information for the complete lighting scenario to be transmitted before decoding can start. The matrices Fₖ of Fig. 3 may be used for a real time control with no or limited buffer at the illumination devices 2. Moreover, if a video data compression algorithm with movement prediction is selected, similarities between the consecutive sets of CSR values for the complete set of illumination devices 2 may be conveniently detected, resulting in only transmitting the differences to the previous CSR values and thus saving even more bandwidth.

Fig. 4 schematically illustrates yet another exemplary matrix arrangement for matrices Fₖ to be used in pre-formatting the lighting control data in the lighting controller 1. The CSR values for neighbouring illumination devices 2 are arranged consecutively in a way that subblocks SBᵢⱼ of x by x rows and columns are generated. A particularly advantageous number of x is 8, since it fits the standard block size of many image or video data compression algorithms which are using discrete cosine transformation (DCT), such as MPEG-2, MPEG-4 AVC and JPEG.

By arranging the CSR values in this certain way, the differences between the values within a dedicated subblock SBᵢⱼ are reduced to a minimum compared with the approach to fill the rows up line by line. This enables a rough quantization with smaller loss of colour fidelity and therefore helps to reduce the required bandwidth even further. As a by-product, this is a beneficial way for usage of image data compression schemes to resolve the presetting that each row is a full set of CSR values at a certain time slot. By employing the approach exemplarily shown in Fig. 4, transmission for lighting control data as specific time slots may be possible without the need for extensive buffering of control data within the illumination devices 2. If several images are transmitted consecutively, still picture data compression algorithms can be used similar to the Motion JPEG (MJPEG) format.

For all exemplary pre-formatting arrangements shown in Figs. 2, 3 and 4, a vast selection of suitable data compression algorithms may be used to compress the lighting control data either for local storage or for streaming of lighting scenarios. Irrespective of what data compression scheme is selected, the bandwidth saving potential is significant: For example, wavelet transformation based JPEG2000 format enables compression rates of up to 1:400 for images without a significant loss of data.

Fig. 5 illustrates a flow diagram for a method 20 for controlling a lighting system, particularly a lighting system 10 as shown in Fig. 1. The method 20 may be employed in an airborne vehicle, such as the aircraft 30 in Fig. 6.

At 21, lighting control data for at least one illumination device 2 is pre-formatted in one or more colour space representation matrices Fₖ having matrix entries Cᵢⱼ; SBᵢⱼ corresponding to colour space representation values for luminaires 3 of the illumination device 2. Such pre-formatting may be done according to one or more of the examples as shown in Figs. 2 to 4. The pre-formatted colour space representation matrices Fₖ are encoded using a data compression algorithm at 22, so that the encoded colour space representation matrices Fₖ may be transmitted to the at least one illumination device 2 via a communication link 8, particularly a wireless communication link 8, at 23. The encoded colour space representation matrices Fₖ may be received by the illumination devices 2 and respectively decoded again for controlling the operational state of the luminaires 3.

### List of reference numerals and signs

- 1: Lighting controller
- 2: Illumination device
- 2₁: Illumination device
- 2₂: Illumination device
- 2_{N}: Illumination device
- 3: Luminaire
- 4: Fluorescent tube
- 5: Solid-state light emitter
- 6: Luminaire controller
- 7: Communication interface
- 8: Communication link
- 10: Lighting system
- 20: Method
- 21: Method step
- 22: Method step
- 23: Method step
- 30: Aircraft
- B₁: Time-slot control data block
- B_{M/d}: Time-slot control data block
- B_{M}: Time-slot control data block

## Claims

1. Lighting system (10) comprising:
at least one illumination device (2) comprising a luminaire (3) and a luminaire controller (6) configured to control the operational state of the luminaire (3) according to lighting control data; and
a lighting controller (1) configured to transmit the lighting control data to each of the at least one illumination device (2),
wherein the lighting controller (1) is configured to pre-format the lighting control data for the at least one illumination device (2) in one or more colour space representation matrices (Fₖ) having matrix entries (Cᵢⱼ; SBᵢⱼ) corresponding to colour space representation values for the luminaire (3), and
wherein the lighting controller (1) is further configured to encode the pre-formatted colour space representation matrices (Fₖ) using a data compression algorithm,
**characterized in that**
the colour space representation matrices (Fₖ) have a number of columns (j) corresponding to the number of illumination devices (2) in the lighting system (10), the subsequent rows (i) of the colour space representation matrices (Fₖ) comprise lighting control data for subsequent time slots (tᵢ) of controlling the operational states of the luminaires (3).

2. Lighting system (10) according to claim 1, wherein the data compression algorithm comprises a run-length encoding scheme, an entropy encoding scheme, a deflation scheme, wavelet transforming, Fourier transforming, Discrete Cosine transforming and/or a fractal compression scheme.

3. Lighting system (10) according to one of the claims 1 to 2, wherein the colour space representation matrices (Fₖ) comprise consecutively arranged subblocks (SBᵢⱼ) of colour space representation values corresponding to lighting control data of luminaires (3) of adjacent illumination devices (2) with respect to the same time slot (tᵢ).

4. Lighting system (10) according to one of the claims 1 to 3, wherein the luminaires (3) comprise fluorescent tubes (4) and/or solid-state light emitters (5).

5. Lighting system (10) according to one of the claims 1 to 4, wherein the lighting controller (1) is configured to transmit the lighting control data to each of the at least one illumination device (2) via a wireless communication link (8).

6. Method (20) for controlling a lighting system (10), the method (20) comprising:
pre-formatting (21) lighting control data for at least one illumination device (2) in one or more colour space representation matrices (Fₖ) having matrix entries (Cᵢⱼ; SBᵢⱼ) corresponding to colour space representation values for luminaires (3) of the illumination device (2);
encoding (22) the pre-formatted colour space representation matrices (Fₖ) using a data compression algorithm; and
transmitting (23) the encoded colour space representation matrices (Fₖ) to each of the at least one illumination device (2) via a communication link (8),
**characterized in that**
the colour space representation matrices (Fₖ) have a number of columns (j) corresponding to the number of illumination devices (2), the subsequent rows (i) of the colour space representation matrices (Fₖ) comprising lighting control data for subsequent time slots (tᵢ) of controlling the operational states of the luminaires (3).

7. Method (20) according to claim 6, wherein the data compression algorithm comprises a run-length encoding scheme, an entropy encoding scheme, a deflation scheme, wavelet transforming, Fourier transforming, Discrete Cosine transforming and/or a fractal compression scheme.

8. Method (20) according to one of the claims 6 to 7, wherein the colour space representation matrices (Fₖ) are transmitted via a wireless communication link (8).

9. Method (20) according to claim 8, wherein the colour space representation matrices (Fₖ) are streamed to each of the at least one illumination device (2).

10. Airborne vehicle (30), comprising a lighting system (10) according to one of the claims 1 to 5.

## Patentansprüche

1. Beleuchtungssystem (10), umfassend:
mindestens eine Beleuchtungsvorrichtung (2), die eine Leuchte (3) und eine Leuchtensteuereinheit (6) umfasst, die dafür ausgestaltet ist, den Betriebszustand der Leuchte (3) gemäß Beleuchtungssteuerungsdaten zu steuern; und
eine Beleuchtungssteuereinheit (1), die dafür ausgestaltet ist, die Beleuchtungssteuerungsdaten zu jeder der mindestens einen Beleuchtungsvorrichtung (2) zu senden,
wobei die Beleuchtungssteuereinheit (1) dafür ausgestaltet ist, die Beleuchtungssteuerungsdaten für die mindestens eine Beleuchtungsvorrichtung (2) in einer oder mehreren Farbraumdarstellungsmatrizes (Fₖ) vorzuformatieren, die Matrixeinträge (Cᵢⱼ; SBᵢⱼ) aufweisen, die Farbraumdarstellungswerten für die Leuchte (3) entsprechen, und
wobei die Beleuchtungssteuereinheit (1) des Weiteren dafür ausgestaltet ist, die vorformatierten Farbraumdarstellungsmatrizes (Fₖ) unter Verwendung eines Datenkomprimierungsalgorithmus zu codieren,
**dadurch gekennzeichnet, dass**
die Farbraumdarstellungsmatrizes (Fₖ) eine Anzahl von Spalten (j) haben, die der Anzahl von Beleuchtungsvorrichtungen (2) in dem Beleuchtungssystem (10) entsprechen, wobei die anschließenden Zeilen (i) der Farbraumdarstellungsmatrizes (Fₖ) Beleuchtungssteuerungsdaten für anschließende Zeitschlitze (tᵢ) zum Steuern der Betriebszustände der Leuchten (3) umfassen.

2. Beleuchtungssystem (10) nach Anspruch 1, wobei der Datenkomprimierungsalgorithmus ein Lauflängencodierungsregime, ein Entropie-Codierungsregime, ein Deflationsregime, eine Wavelet-Transformierung, eine Fourier-Transformierung, eine Diskrete-Kosinus-Transformierung und/oder ein Fraktalkomprimierungsregime umfasst.

3. Beleuchtungssystem (10) nach einem der Ansprüche 1 und 2, wobei die Farbraumdarstellungsmatrizes (Fₖ) aufeinanderfolgend angeordnete Teilblöcke (SBᵢⱼ) von Farbraumdarstellungswerten umfassen, die Beleuchtungssteuerungsdaten von Leuchten (3) benachbarter Beleuchtungsvorrichtungen (2) mit Bezug auf denselben Zeitschlitz (tᵢ) entsprechen.

4. Beleuchtungssystem (10) nach einem der Ansprüche 1 bis 3, wobei die Leuchten (3) Leuchtstoffröhren (4) und/oder Festkörperleuchtmittel (5) umfassen.

5. Beleuchtungssystem (10) nach einem der Ansprüche 1 bis 4, wobei die Beleuchtungssteuereinheit (1) dafür ausgestaltet ist, die Beleuchtungssteuerungsdaten zu jeder der mindestens einen Beleuchtungsvorrichtung (2) über eine Drahtloskommunikationsstrecke (8) zu senden.

6. Verfahren (20) zum Steuern eines Beleuchtungssystems (10), wobei das Verfahren (20) Folgendes umfasst:
Vorformatieren (21) von Beleuchtungssteuerungsdaten für mindestens eine Beleuchtungsvorrichtung (2) in einer oder mehreren Farbraumdarstellungsmatrizes (Fₖ), die Matrixeinträge (Cᵢⱼ; SBᵢⱼ) aufweisen, die Farbraumdarstellungswerten für Leuchten (3) der Beleuchtungsvorrichtung (2) entsprechen;
Codieren (22) die vorformatierten Farbraumdarstellungsmatrizes (Fₖ) unter Verwendung eines Datenkomprimierungsalgorithmus; und
Senden (23) der codierten Farbraumdarstellungsmatrizes (Fₖ) zu jeder der mindestens einen Beleuchtungsvorrichtung (2) über eine Kommunikationsstrecke (8),
**dadurch gekennzeichnet, dass**
die Farbraumdarstellungsmatrizes (Fₖ) eine Anzahl von Spalten (j) haben, die der Anzahl von Beleuchtungsvorrichtungen (2) entsprechen, wobei die anschließenden Zeilen (i) der Farbraumdarstellungsmatrizes (Fₖ) Beleuchtungssteuerungsdaten für anschließende Zeitschlitze (tᵢ) zum Steuern der Betriebszustände der Leuchten (3) umfassen.

7. Verfahren (20) nach Anspruch 6, wobei der Datenkomprimierungsalgorithmus ein Lauflängencodierungsregime, ein Entropie-Codierungsregime, ein Deflationsregime, eine Wavelet-Transformierung, eine Fourier-Transformierung, eine Diskrete-Kosinus-Transformierung und/oder ein Fraktalkomprimierungsregime umfasst.

8. Verfahren (20) nach einem der Ansprüche 6 und 7, wobei die Farbraumdarstellungsmatrizes (Fₖ) über eine Drahtloskommunikationsstrecke (8) gesendet werden.

9. Verfahren (20) nach Anspruch 8, wobei die Farbraumdarstellungsmatrizes (Fₖ) zu jeder der mindestens einen Beleuchtungsvorrichtung (2) gestreamt werden.

10. Luftfahrzeug (30), umfassend ein Beleuchtungssystem (10) nach einem der Ansprüche 1 bis 5.

## Revendications

1. Système d'éclairage (10) comprenant :
au moins un dispositif d'éclairage (2) comprenant un luminaire (3) et un dispositif de commande de luminaire (6) conçu pour régir l'état de fonctionnement du luminaire (3) en fonction de données de commande d'éclairage ; et
un dispositif de commande d'éclairage (1) conçu pour transmettre les données de commande d'éclairage au/à chaque dispositif d'éclairage (2),
dans lequel le dispositif de commande d'éclairage (1) est conçu pour préformater les données de commande d'éclairage destinées à au moins un dispositif d'éclairage (2) dans une ou plusieurs matrice (s) de représentation de l'espace chromatique (Fₖ) ayant des entrées de matrice (s) (Cᵢⱼ SBᵢⱼ) correspondant à des valeurs de représentation de l'espace chromatique destinées au luminaire (3), et
dans lequel le dispositif de commande d'éclairage (1) est conçu en outre pour coder les matrices préformatées de représentation de l'espace chromatique (Fₖ) à l'aide d'un algorithme de compression de données,
**caractérisé en ce que** :
les matrices de représentation de l'espace chromatique (Fₖ) ont un certain nombre de colonnes (j) correspondant au nombre de dispositifs d'éclairage (2) dans le système d'éclairage (10), les rangées successives (i) des matrices de représentation de l'espace chromatique (Fₖ) comprennent des données de commande d'éclairage pour des intervalles de temps successifs (tᵢ) de commande des états de fonctionnement des luminaires (3).

2. Système d'éclairage (10) selon la revendication 1, dans lequel l'algorithme de compression de données comprend un schéma de codage par longueur de plage, un schéma de codage entropique, un schéma par déflation, une transformée en ondelettes, une transformée de Fourier, une transformée en cosinus discrète et/ou un schéma de compression fractale.

3. Système d'éclairage (10) selon l'une des revendications 1 et 2, dans lequel les matrices de représentation de l'espace chromatique (Fₖ) comprennent des sous-blocs (SBᵢⱼ) de valeurs de représentation de l'espace chromatique, disposés les uns à la suite des autres, correspondant à des données de commande d'éclairage de luminaires (3) de dispositifs d'éclairage voisins (2) par rapport au même intervalle de temps (tᵢ).

4. Système d'éclairage (10) selon l'une des revendications 1 à 3, dans lequel les luminaires (3) comprennent des tubes fluorescents (4) et/ou des émetteurs de lumière à semiconducteurs (5).

5. Système d'éclairage (10) selon l'une des revendications 1 à 4, dans lequel le dispositif de commande d'éclairage (1) est conçu pour transmettre les données de commande d'éclairage au/à chaque dispositif d'éclairage (2) par le biais d'une liaison de communication sans fil (8).

6. Procédé (20) pour commander un système d'éclairage (10), le procédé (20) comprenant les étapes suivantes :
préformater (21) des données de commande d'éclairage destinées à au moins un dispositif d'éclairage (2) dans une ou plusieurs matrice(s) de représentation de l'espace chromatique (Fₖ) ayant des entrées de matrice (s) (Cᵢⱼ ; SBᵢⱼ ) correspondant à des valeurs de représentation de l'espace chromatique destinées aux luminaires (3) du dispositif d'éclairage (2) ;
coder (22) les matrices préformatées de représentation de l'espace chromatique (Fₖ) à l'aide d'un algorithme de compression de données ; et
transmettre (23) les matrices codées de représentation de l'espace chromatique (Fₖ) au/à chaque dispositif d'éclairage (2) par le biais d'une liaison de communication (8), **caractérisé en ce que** :
les matrices de représentation de l'espace chromatique (Fₖ) ont un certain nombre de colonnes (j) correspondant au nombre de dispositifs d'éclairage (2), les rangées successives (i) des matrices de représentation de l'espace chromatique (Fₖ) comprenant des données de commande d'éclairage pour des intervalles de temps successifs (tᵢ) de commande des états de fonctionnement des luminaires (3).

7. Procédé (20) selon la revendication 6, dans lequel l'algorithme de compression de données comprend un schéma de codage par longueur de plage, un schéma de codage entropique, un schéma par déflation, une transformée en ondelettes, une transformée de Fourier, une transformée en cosinus discrète et/ou un schéma de compression fractale.

8. Procédé (20) selon l'une des revendications 6 et 7, dans lequel les matrices de représentation de l'espace chromatique (Fₖ) sont transmises par le biais d'une liaison de communication sans fil (8).

9. Procédé (20) selon la revendication 8, dans lequel les matrices de représentation de l'espace chromatique (Fₖ) sont transmises en continu au/à chaque dispositif d'éclairage (2).

10. Véhicule aérien (30) comprenant un système d'éclairage (10) selon l'une des revendications 1 à 5.
